# EUROPÄISCHE PATENTSCHRIFT

(11) **EP 0 490 414 B1**
(45) Veröffentlichungstag und Bekanntmachung des Hinweises auf die Patenterteilung: **01.03.1995**
(21) Anmeldenummer: 91202854.5
(22) Anmeldetag: 05.11.1991
(51) Int. Cl.: B01D 53/34

(54) **Verfahren zur Entstaubung, Entschwefelung und Entstickung von Verbrennungsabgasen**
Process for dedusting, desulfurisation and denitration of combustion exhaust gases
Procédé pour le depoussiérage, la désulfuration et la dénitration de gaz d'échappement provenant de la combustion

(30) Priorität: 08.12.1990 DE 4039213
(43) Veröffentlichungstag der Anmeldung: 17.06.1992
(73) Patentinhaber: METALLGESELLSCHAFT Aktiengesellschaft, 60015 Frankfurt (DE)
(72) Erfinder: Weisweiler, Werner, Prof. Dr., W-7537 Remchingen-Singen (DE); Herrmann, Erhard, W-7516 Karlsbad-Spielberg (DE); Fennemann, Wolfgang, W-6367 Karben 6 (DE); Sauer, Harald, Dr., W-6000 Frankfurt am Main (DE); Thöne, Bernd, W-6360 Friedberg (DE)

(56) Entgegenhaltungen:
- EP-A- 0 172 588
- DE-A- 3 642 980

## Beschreibung

Die Erfindung bezieht sich auf ein Verfahren zur Entstaubung, Entschwefelung und Entstickung von Verbrennungsabgasen.

Bei der Energieerzeugung zum Zweck der Stromgewinnung sowie der Durchführung endothermer Prozesse durch Verbrennung von Brennstoffen mit Luftsauerstoff entstehen Verbrennungsabgase, die Stickstoff, Kohlendioxid, Wasser und Sauerstoff sowie verschiedene Schadstoffe enthalten. Der Sauerstoffgehalt der Verbrennungsabgase beträgt in der Regel 1 bis 10 %. Als besonders wichtige Schadstoffe werden insbesondere HCl, Oxide des Schwefels und Stickstoffs - also SO₂, SO₃, NO und NO₂ - sowie die staubförmige Flugasche, die aus dem Verbrennungsraum mit dem Abgasstrom ausgetragen wird, angesehen. Diese Schadstoffe müssen weitgehend aus den Verbrennungsabgasen abgetrennt werden. Der SO₂-Gehalt der Verbrennungsabgase liegt in der Regel zwischen 500 und 10 000 mg/Nm³, während der SO₃-Gehalt nur bis zu 50 mg/Nm³ Abgas beträgt. Die Oxide des Stickstoffs sind in den Verbrennungsabgasen in einer Menge von ca. 100 bis 3 000 mg/Nm³, berechnet als NO₂, enthalten. Der Staubgehalt der Verbrennungsabgase beträgt in der Regel ca. 1 bis 10 g/Nm³; er kann aber auch auf Werte um 50 g/Nm³ ansteigen. Neben diesen, mengenmäßig besonders bedeutenden Schadstoffen sind in den Verbrennungsabgasen weitere Schadstoffe, z.B. N₂O, HF, Schwermetalle, Schwermetallverbindungen, Dioxine, Furane, hochkondensierte aromatische Kohlenwasserstoffe sowie CO, enthalten, deren Abtrennung an dieser Stelle außer Betracht bleiben kann.

Die Entstaubung von Verbrennungsabgasen nach bekannten Verfahren wird in der Praxis in erheblichem Umfang durchgeführt, wobei insbesondere die Fliehkraftabscheidung, die Filtration und die Elektrofiltration zur Anwendung kommen. Zur Entschwefelung der Verbrennungsabgase - also zur Abtrennung von SO₂ und SO₃ - werden heute nasse, quasi-trockene und trockene Abscheideverfahren eingesetzt, die im wesentlichen entweder mit wäßrigen alkalischen Lösungen oder den festen Absorptionsmitteln CaO bzw. Ca(OH)₂ arbeiten. Bei den bekannten Entschwefelungsverfahren wird auch der größte Teil des HCl aus den Verbrennungsabgasen entfernt. Die Entstickung der Verbrennungsabgase - also die Abtrennung von NO und NO₂ - wird heute durch katalytische Reduktion mit NH₃ bei Temperaturen von 300 bis 500°C oder durch nichtkatalytische Reduktion mit NH₃ bei 750 bis 1 000°C erreicht. Auch die gleichzeitige Entschwefelung und Entstickung von Verbrennungsabgasen wurde bereits vorgeschlagen.

Aus der EP-A-0 273 508 ist ein Verfahren zur Reinigung von Abgasen, die neben Staub auch gasförmige Schadstoffe wie SO₂, SO₃, HCl, HF und Stickoxide enthalten, durch Zugabe von Sorbentien in den Gasstrom und trockene Abscheidung der mit Schadstoffen beladenen Sorbentien zusammen mit dem Staub bekannt. Bei diesem Verfahren werden 70 bis 90 % der insgesamt benötigen Sorbentien als trockenes Pulver in den Gasstrom eingebracht. Der Gasstrom wird anschließend verwirbelt, und 10 bis 30 % der insgesamt benötigen Sorbentien werden als Lösung oder Aufschlämmung in den verwirbelten Gasstrom eingebracht.

Aus der DE-A-3 642 980 ist ein Verfahren zur katalytischen Reduktion von in einem Gas enthaltenen NO mit dem Reduktionsmittel NH₃ bekannt, bei dem das NO-haltige Gas mit NH₃ gemischt und die Mischung bei 185 bis 500°C sowie bei Normaldruck am Katalysator zur Reaktion gebracht wird und bei dem der Katalysator aus einem sauren Träger sowie den katalytisch aktiven Substanzen CuSO₄, MnSO₄, FeSO₄ und/oder Fe₂(SO₄)₃ besteht. In der DE-OS 3 642 980 wird ferner vorgeschlagen, daß die katalytische Reduktion des NO in der Wirbelschicht, vorzugsweise in der zirkulierenden Wirbelschicht, durchgeführt wird. Dieses bekannte Verfahren ist nicht nur auf die Entstickung von Verbrennungsabgasen gerichtet, sondern es eröffnet auch die Möglichkeit, daß der katalytischen Entstickung in der Wirbelschicht eine Vorrichtung zur Staubabscheidung nachgeschaltet wird, die auch den noch im Abgas enthaltenen Staub abtrennt.

Ferner wird in der DE-A-3 701 527 ein Verfahren zur gleichzeitigen Entstickung und Entschwefelung eines sauerstoffhaltigen Abgases vorgeschlagen, bei dem das Abgas mit NH₃ gemischt und dann als Wirbelgas einer Wirbelschicht zugeführt wird, wobei das Wirbelbett aus einem Katalysator besteht, der die Reduktion des NO mit NH₃ zu N₂ und H₂O sowie die Oxidation des SO₂ mit O₂ zu SO₃ bewirkt. Der in der DE-A-3 701 527 vorgeschlagene Katalysator besteht aus einem Träger, den katalytisch aktiven Substanzen V₂O₅ sowie Fe₂O₃, FeSO₄ und/oder Fe₂(SO₄)₃ sowie Alkalisulfaten. Das durch Oxidation gebildete SO₃ kann in Form von Schwefelsäure gewonnen oder durch ein Entschwefelungsmittel gebunden werden, das aus Na₂CO₃, MgO, MgCO₃, CaO, CaCO₃ und/oder Ca(OH)₂ besteht. Das Entschwefelungsmittel kann entweder direkt in die Wirbelschicht eingebracht werden, oder es wird mit dem Wirbelgas in Kontakt gebracht, nachdem das Wirbelgas die Wirbelschicht verlassen hat. Das bekannte Verfahren wird bei einer Temperatur von 350 bis 600°C durchgeführt. Obwohl das aus der DE-A-3 701 527 bekannte Verfahren die gleichzeitige Entschwefelung und Entstickung von Verbrennungsabgasen ermöglicht, hat es dennoch den Nachteil, daß zu seiner Durchführung ein Katalysator benötigt wird, dessen Herstellung Kosten verursacht und der im Verlauf des Betriebs durch mechanischen Abrieb verbraucht wird. Außerdem führen größere Staubgehalte im Rohgas zu Verfahrensstörungen. Schließlich ist es außerordentlich schwierig, aus dem die Wirbelschicht verlassenden Gas das nicht verbrauchte Entschwefelungsmittel - insbesondere CaO und Ca(OH)₂ - quantitativ abzuscheiden.

Der Erfindung liegt daher die Aufgabe zugrunde, ein Verfahren zur Entstaubung, Entschwefelung und Entstickung von Verbrennungsabgasen zu schaffen, das betriebssicher und kostengünstig arbeitet und das in Gegenwart der im Verbrennungsabgas enthaltenen Flugasche eine hohe Entschwefelungs- und Entstickungsleistung aufweist sowie eine optimale Entstaubung ermöglicht, wobei insbesondere eine weitgehende Abtrennung des nicht verbrauchten Entschwefelungsmittels erreicht werden soll.

Die der Erfindung zugrundeliegende Aufgabe wird durch ein Verfahren gelöst, bei dem die staubhaltigen Verbrennungsabgase mit NH₃ gemischt und dann als Wirbelgas einem Wirbelschichtreaktor zugeführt werden, in den Ca(OH)₂ sowie FeSO₄ eingebracht werden und der bei einer Temperatur von 300 bis 450°C, mit einer mittleren Feststoffkonzentration von 0,3 bis 3 kg/Nm³ sowie mit einer Gasgeschwindigkeit von 2,5 bis 7,5 m/s betrieben wird, bei dem die aus dem Wirbelschichtreaktor austretenden Verbrennungsabgase in einen mehrstufigen Elektroabscheider geführt werden, bei dem die in der ersten Stufe des Elektroabscheiders abgeschiedenen Feststoffe in den Wirbelschichtreaktor zurückgeführt und die in den weiteren Stufen des Elektroabscheiders abgeschiedenen Feststoffe teilweise in den Wirbelschichtreaktor zurückgeführt und teilweise ausgetragen werden, so daß sich im Wirbelschichtreaktor ein Feststoffgemisch aus Flugasche, Eisensulfaten und den Kalziumverbindungen Ca(OH)₂, CaCO₃, CaO, CaSO₄ sowie CaSO₃ einstellt. Durch diese Verfahrensführung wird in vorteihafter Weise sowohl eine weitgehende Entstaubung, als auch eine weitgehende Entschwefelung und Entstickung der Verbrennungsabgase erreicht. Während im Reingas immer ein Reststaubgehalt von weniger als 50 mg/Nm³ eingehalten werden kann, liegt der SO₂- und der NOₓ-Gehalt (letzterer berechnet als NO₂) im Reingas immer jeweils unter 200 mg/Nm³. Es kommt hinzu, daß nur sehr geringe Mengen der Eisensulfate ausgetragen werden, da mindestens 90 % der Eisensulfate in der ersten Stufe des Elektroabscheiders abgeschieden und in den Wirbelschichtreaktor zurückgeführt werden. Ein besonderer Vorteil des erfindungsgemäßen Verfahrens, der für den Fachmann nicht vorhersehbar war, besteht darin, daß die Eisensulfate, welche die erste Stufe des Elektroabscheiders passieren, die Abscheidung der feinteiligen Flugasche, der feinteiligen Reaktionsprodukte des Ca(OH)₂ - also CaSO₃, CaSO₄ und CaCO₃ - und des feinteiligen, nicht verbrauchten Ca(OH)₂ entscheidend begünstigt, so daß nahezu die gesamte Menge des nicht verbrauchten Ca(OH)₂ im Feststoffkreislauf verbleibt und für die Bindung der Oxide des Schwefels zur Verfügung steht. Die durch die Eisensulfate verursachte, nahezu quantitative Abscheidung des Ca(OH)₂ im Elektroabscheider bewirkt, daß der molare stöchiometrische Überschuß von Ca(OH)₂ zum gesamten Schwefelgehalt der Verbrennungsabgase im Gegensatz zu dem bei den bekannten trockenen Entschwefelungsverfahren üblichen molaren Überschuß lediglich 1,3 bis 1,8 beträgt. Dieser Vorteil stellt einen erheblichen technischen Fortschritt dar. Schließlich wird auch das im Verbrennungsabgas enthaltene HCl nahezu quantitativ durch Reaktion mit dem Ca(OH)₂ abgetrennt. Die im Wirbelschichtreaktor befindlichen Eisensulfate entstehen aus FeSO₄, das dem Wirbelschichtreaktor in kristallwasserhaltiger Form zugeführt wird. Die Eisensulfate sind ein wasserfreies Gemisch aus FeSO₄, Fe₂(SO₄)₃ und Oxisulfaten des Eisens. Die im Wirbelschichtreaktor befindlichen Kalziumverbindungen entstehen durch Reaktion von SO₂, SO₃ und CO₂ mit dem Ca(OH)₂, das dem Wirbelschichtreaktor zugeführt wird.

Desweiteren gewährleisten die Bedingungen einer mittleren Feststoffkonzentration von 0,3 bis 3 kg/Nm³ und einer Gasgeschwindigkeit von 2,5 bis 7,5 m/s im Wirbelschichtreaktor, daß eine gleichmäßige Vermischung aller Reaktanten eintritt, und andererseits der Wirbelschichtreaktor durch die Feststoffteilchen keine mechanische Erosion erleidet. Bei den erfindungsgemäßen Bedingungen bleibt aber auch die kristalline Struktur der Eisensulfate und insbesondere des FeSO₄ weitgehend erhalten. Das FeSO₄ kann zum Beispiel entweder in Form einer wäßrigen Lösung oder als kristalliner Feststoff in den Wirbelschichtreaktor eingetragen werden oder das FeSO₄ kann in Wasser gelöst sowie dann auf Quarzsand oder Flugasche bei 300 bis 400°C aufgebracht werden und das dabei anfallende Granulat kann dann in den Wirbelschichtreaktor eingetragen werden. Die Erzeugung eines FeSO₄-haltigen Granulats hat den Vorteil, daß der FeSO₄-Abrieb vermindert werden kann. Das direkte Einbringen von kristallinem FeSO₄ in den Wirbelschichtreaktor ist deshalb besonders vorteilhaft, weil im Handel befindliche, kristallwasserhaltige und preisgünstige Produkte zum Einsatz kommen können.

In weiterer Ausgestaltung der Erfindung ist vorgesehen, daß den Verbrennungsabgasen pro Mol NO₂ 0,7 bis 1,3 Mol NH₃ zugegeben werden. Der NH₃-Überschuß führt nicht zu einem Ammoniakschlupf im Reingas, und die aus dem Elektroabscheider abgezogenen festen Verfahrensrückstände enthalten nur eine sehr geringe Menge an Ammoniumsalzen.

Ferner ist in weiterer Ausgestaltung der Erfindung vorgesehen, daß das Ca(OH)₂ ganz oder teilweise durch CaO ersetzt wird. Hierdurch können die Verfahrenskosten gesenkt werden, ohne daß es zu einer Beeinträchtigung der Entschwefelungsleistung kommt. Es ist lediglich darauf zu achten, daS sowohl das Ca(OH)₂ als auch das CaO feinteilig sind - also einen Teilchendurchmesser < 50 »m aufweisen - und daS diese beiden Stoffe möglichst wenig CaCO₃ enthalten - also der CaCO₃-Gehalt beider Verbindungen sollte < 5 Gew.% sein.

Zur Erhöhung der Entstickungsleistung ist in weiterer Ausgestaltung der Erfindung vorgesehen, daß dem Feststoffgemisch pro Mol des in den Wirbelschichtreaktor eingebrachten FeSO₄ 0,1 bis 0,5 Mol MnSO₄ zugegeben werden. Durch diese Maßnahme läßt sich die Entstickungsleistung von ca. 90 % auf ca. 93 bis 95 % steigern. Andererseits ist das MnSO₄ - wie auch die Eisensulfate - in den festen Verfahrensprodukten, die den Elektroabscheider verlassen, in so geringer Menge enthalten, daß es die Umwelt nicht belastet.

Nach der Erfindung ist schließlich vorgesehen, daß der Wirbelschichtreaktor mit einem Feststoffgemisch betrieben wird, das aus 0,1 bis 5 Gew.% Eisensulfaten, berechnet als FeSO₄, 10 bis 60 Gew.% Flugasche und Rest Kalziumverbindungen besteht. Bei diesen Bedingungen werden sowohl hinsichtlich der Entstaubung als auch hinsichtlich der Entstickung und Entschwefelung sehr gute Ergebnisse erreicht. Der in der Flugasche eventuell enthaltene, unverbrauchte Kohlenstoff beeinflußt die Abgasreinigung nicht nachteilig.

Die festen Verfahrensprodukte zeichnen sich in überraschender Weise dadurch aus, daß sie einen sehr geringen Gehalt an CaSO₃, CaO und Ca(OH)₂ aufweisen und daß die Eigenschaften der Flugasche durch das bei der Entschwefelungsreaktion entstehende CaSO₄ und das als Nebenprodukt anfallende CaCO₃ erheblich verbessert werden. Es wurde nämlich beobachtet, daß die Handhabbarkeit des festen Verfahrensprodukts durch Besprühen mit Wasser erheblich verbessert werden kann, da das resultierende Produkt krümelig ist, keinen Staubcharakter hat und durch den Verdünnungseffekt der Kalziumverbindungen insgesamt einen sehr geringen Schwermetallgehalt aufweist. Außerdem liegen die im Verfahrensprodukt enthaltenen Schwermetalle weitgehend in immobilisierter Form - also z.B. als Oxide - vor, was noch durch den geringen Gehalt an CaO und Ca(OH)₂ sowie durch die Bindungswirkung des wasserfreien CaSO₄ begünstigt wird.

Das erfindungsgemäße Verfahren kann vorteilhaft in einer Vorrichtung durchgeführt werden, die aus einem mit konischem Boden versehenen sowie einbautenfreien Wirbelschichtreaktor und einem mehrstufigen Elektroabscheider besteht, welche durch einen Abgaskanal miteinander verbunden sind, bei der in den konischen Boden des Wirbelschichtreaktors die Leitung für die Zufuhr der staubhaltigen Verbrennungsabgase mündet, bei der jede Stufe des Elektroabscheiders einen Staubbunker aufweist, bei der die einzelnen Staubbunker durch eine Feststoffrückführleitung mit dem konischen Teil des Wirbelschichtreaktors verbunden sind und bei der die Feststoffrückführleitung eine Einrichtung zur Entnahme von Feststoffen aufweist. Diese Vorrichtung gestattet die betriebssichere Durchführung des erfindungsgemäßen Verfahrens auch im großen Maßstab. Die Höhe des Wirbelschichtreaktors ist so zu bemessen, daß für die Feststoffteilchen bei einmaligem Durchgang durch den Reaktor eine mittlere Verweilzeit von 2 bis 8 Sekunden zur Verfügung steht.

Es hat sich als zweckmäßig erwiesen, daß die Wand der ersten Stufe des Elektroabscheiders, die der Gasaustrittsöffnung des Abgaskanals benachbart ist, Gasdurchtrittsöffnungen aufweist und daß sich unterhalb der Wand ein Staubunker befindet, der über die Feststoffrückführleitung mit dem konischen Teil des Wirbelschichtreaktors verbunden ist. In überraschender Weise hat sich gezeigt, daß bereits an der mit Gasdurchtrittsöffnungen versehenen Wand ein großer Teil der Eisensulfate abgeschieden wird und über den unterhalb der Wand angeordneten Staubbunker in den konischen Teil des Wirbelschichtreaktors zurückgeführt werden kann. Diese Gestaltung des Elektroabscheiders ermöglicht also, daß aus dem Feststoffkreislauf nur eine sehr geringe Menge der Eisensulfate ausgetragen wird.

Es hat sich ferner als zweckmäßig erwiesen, daß dem Elektrofilter ein Staubfilter nachgeschaltet ist, das über die Feststoffrückführleitung mit dem konischen Teil des Wirbelschichtreaktors in Verbindung steht. Diese Ausführung kommt in den Fällen zur Anwendung, in denen es erforderlich ist, den Staubgehalt des Reingases auf einen Wert unter 20 mg/Nm³ abzusenken. Das Schlauchfilter wird durch Rückspühlung oder Pulsen abgereinigt, und die abgeschiedenen Feststoffteilchen werden über die Feststoffrückführleitung teilweise in den konischen Teil des Wirbelschichtreaktors zurückgeführt. Die verwendeten Schlauchfilter und Abreinigungsvorrichtungen sind an sich bekannt.

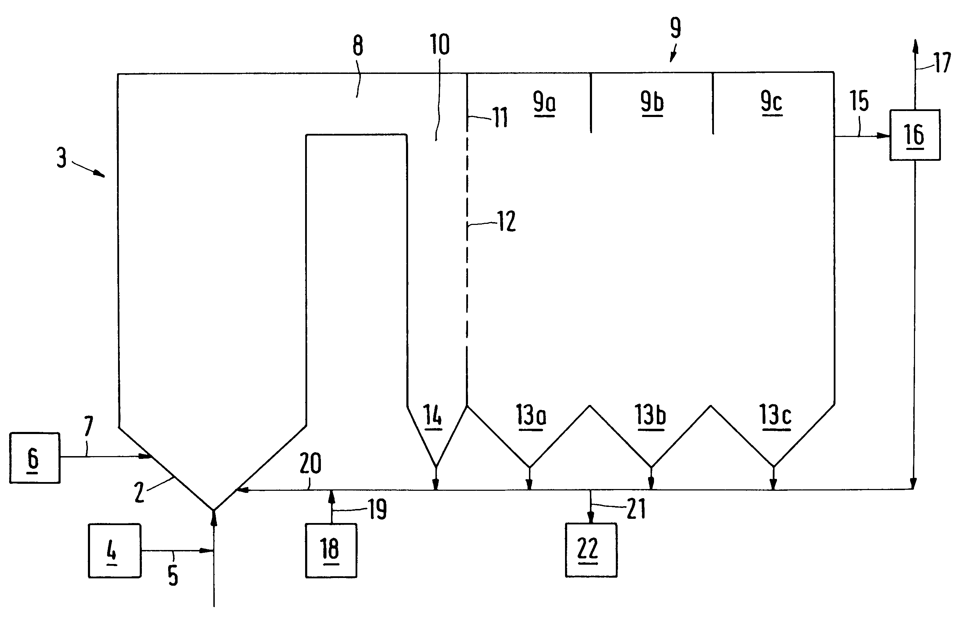

Das erfindungsgemäße Verfahren wird nachfolgend anhand der Zeichnung beispielhaft erläutert.

Über die Leitung 1 wird das staubhaltige Verbrennungsabgas, dessen Temperatur ca. 380°C beträgt und das einen Staubgehalt von ca. 6 g/Nm³, einen mittleren SO₂-Gehalt von 1 500 mg/Nm³ sowie einen NOₓ-Gehalt von etwa 600 mg/Nm³ (berechnet als NO₂) hat, in den konischen Boden 2 des Wirbelschichtreaktors 3 als Fluidisierungsgas eingebracht. Der Wirbelschichtreaktor 3 hat eine Höhe von 20 m und wird mit einer Gasgeschwindigkeit von 4 m/sec. betrieben, so daß die Feststoffteilchen im Wirbelschichtreaktor bei einmaligem Durchgang eine Verweilzeit von ca. 5 sec. haben. Aus dem Vorratsbehälter 4 werden über die Leitung 5 pro Nm³ Abgas 250 mg gasförmiges NH₃ in die Leitung 1 eingebracht, die als Mischstrecke wirkt. Aus dem Vorratsbunker 6 werden über die Leitung 7 pro Nm³ Abgas 2 610 mg Ca(OH)₂ über den konischen Boden 2 in den Wirbelschichtreaktor 3 pneumatisch eingebracht, wobei als Fördermedium Luft verwendet wird. Das Ca(OH)₂ hat einen mittleren Teilchendurchmesser von ca. 10 »m und einen CaCO₃-Gehalt < 3 %.

Im Wirbelschichtreaktor 3 mischen sich alle Reaktanten und gelangen über die Gasaustrittsöffnung 10 des Abgaskanals 8 in den Elektroabscheider 9, der aus drei Stufen 9a, 9b, 9c besteht. Die dem Abgaskanal 8 benachbarte Wand 11 der ersten Stufe 9a des Elektroabscheiders 9 ist mit Gasdurchtrittsöffnungen 12 versehen, durch die das Abgas in die erste Stufe 9a des Elektroabscheiders 9 eintritt. Die einzelnen Stufen des Elektroabscheiders 9 sind jeweils mit den Staubbunkern 13a, 13b und 13c ausgerüstet, während sich unterhalb des Abgaskanals 8 der Staubbunker 14 befindet, der an die Wand 11 der ersten Stufe 9a des Elektroabscheiders 9 unmittelbar angrenzt. Der Elektroabscheider 9 weist die an sich bekannten Merkmale auf; er ist also mit Sprüh- und Niederschlagselektroden ausgerüstet und wird durch Klopfung abgereinigt, wobei der abgereinigte Staub in die einzelnen Staubbunker 13a, 13b und 13c fällt. Das entstaubte Abgas verläßt den Elektroabscheider 9 über die Leitung 15. Es hat einen Staubgehalt von 50 mg/Nm³, einen SO₂-Gehalt von weniger als 200 mg/Nm³ und einen NOₓ-Gehalt von weniger als 200 mg/Nm³. Im Schlauchfilter 16 erfolgt eine weitere Entstaubung, so daß der Staubgehalt des über die Leitung 17 in die Atmosphäre entlassenen Reingases kleiner als 10 mg/Nm³ ist. Das Schlauchfilter wird durch periodisches Pulsen mit einem Reingasstrom abgereinigt.

Aus dem Vorratsgefäß 18 werden über die Leitungen 19 und 20 sowie über den konischen Boden 2 pro Nm³ Abgas 366 mg FeSO₄ . 7 H₂O in den Wirbelschichtreaktor 3 gefördert. Das FeSO₄ . 7 H₂O wird während des Durchgangs durch den Wirbelschichtreaktor 3 und den Elektroabscheider 9 entwässert und teilweise oxidiert, so daß im Verfahrensprodukt ein Gemisch aus Eisensulfaten vorliegt. Ca. 90 % der Eisensulfate werden durch Prallabscheidung im Staubbunker 14 gesammelt und über die Leitung 20 in den Wirbelschichtreaktor 3 zurückgeführt. Aus den Staubbunkern 13a, 13b, 13c sowie aus dem Schlauchfilter 16 gelangt der dort angefallene Staub ebenfalls in die Feststoffrückführleitung 20 und wird teilweise über den konischen Boden 2 in den Wirbelschichtreaktor 3 eingetragen. Die Förderung des rückgeführten Staubs erfolgt pneumatisch mit Luft.

Der Feststoffrückführleitung 20 wird über die Leitung 21 ein Teil des abgeschiedenen, festen Verfahrensprodukts entnommen und im Sammelbunker 22 gelagert, bevor es - ggf. nach Besprühen mit Wasser - auf eine hierfür geeignete Deponie gebracht wird. Das im Sammelbunker 22 befindliche Produkt besteht aus folgenden Verbindungen:
Eisensulfate (berechnet als Fe₂(SO₄)₃) = 2,5 %, Ca(OH)₂ = 0,9 %, CaCO₃ = 11,1 %, CaSO₃ = 2,3 %, CaSO₄ = 26,2 %, Rest Flugasche.

Da die Verbrennungsabgase bei der Energieerzeugung aus Steinkohle angefallen waren, enthielt das Verfahrensprodukt keine nachweisbaren Mengen an Quecksilber, Kadmium und Zink.

Mit dem erfindungsgemäßen Verfahren wird eine Entstaubungsleistung von 99,2 %, eine Entschwefelungsleistung von 95 % und eine Entstickungsleistung von 90 % erreicht, wobei das Endprodukt ein Verhältnis von CaSO₄ : CaSO₃ von ca. 10 : 1 aufweist und wobei etwa ein Drittel des zugegebenen Ca(OH)₂ zu CaCO₃ umgesetzt wird. Das erfindungsgemäße Verfahren arbeitet mit einem Verhältnis Ca : S von ca. 1,5 : 1, was als außerordentlich vorteilhafter Wert anzusehen ist. Die Eisensulfate und insbesondere das FeSO₄ wirken als Katalysator der Entstickungsreaktion, bei der die Oxide des Stickstoffs NO und NO₂ durch NH₃ reduziert werden. Die Katalysatorwirkung kann einerseits durch Zugabe von geringen Mengen MnSO₄ noch verbessert werden, wobei während des Dauerbetriebs keine Beeinträchtigung der katalytischen Wirkung der Eisensulfate und des MnSO₄ durch die in den Verbrennungsabgasen enthaltene Asche beobachtet wurde. Andererseits kann die Menge des in den Wirbelschichtreaktor eingebrachten FeSO₄ dann vermindert werden, wenn das Verbrennungsabgas nur geringe Mengen an NOₓ enthält, z.B. 300 mg/Nm³.

Es ist besonders vorteilhaft, das feste Verfahrensprodukt nach Abtrennung aus dem Verfahrenskreislauf anzufeuchten, da die Eisensulfate hierdurch entsprechend der Gleichung

Fe₂(SO₄)₃ + 3 Ca(OH)₂ → 2 Fe(OH)₃ + 3 CaSO₄

in wasserunlösliche Verbindungen überführt werden. Weiterhin ist das im festen Verfahrensprodukt enthaltene CaCO₃ ein guter "Puffer" gegenüber dem sauren Regen. Beide Effekte wirken sich positiv auf das Deponie-Verhalten des festen Verfahrensprodukts aus.

## Patentansprüche

1. Verfahren zur Entstaubung, Entschwefelung und Entstickung von Verbrennungsabgasen, bei dem die staubhaltigen Verbrennungsabgase mit NH₃ gemischt und dann als Wirbelgas einem Wirbelschichtreaktor zugeführt werden, in den Ca(OH)₂ sowie FeSO₄ eingebracht werden und der bei einer Temperatur von 300 bis 450°C, mit einer mittleren Feststoffkonzentration von 0,3 bis 3 kg/Nm³ sowie mit einer Gasgeschwindigkeit von 2,5 bis 7,5 m/s betrieben wird, bei dem die aus dem Wirbelschichtreaktor austretenden Verbrennungsabgase in einen mehrstufigen Elektroabscheider geführt werden, bei dem die in der ersten Stufe des Elektroabscheiders abgeschiedenen Feststoffe in den Wirbelschichtreaktor zurückgeführt und die in den weiteren Stufen des Elektroabscheiders abgeschiedenen Feststoffe teilweise in den Wirbelschichtreaktor zurückgeführt und teilweise ausgetragen werden, so daß sich im Wirbelschichtreaktor ein Feststoffgemisch aus Flugasche, Eisensulfaten und den Kalziumverbindungen Ca(OH)₂, CaCO₃, CaO, CaSO₄ sowie CaSO₃ einstellt.

2. Verfahren nach Anspruch 1, dadurch gekennzeichnet, daß den Verbrennungsabgasen pro Mol NO₂ 0,7 bis 1,3 Mol NH₃ zugegeben werden.

3. Verfahren nach den Ansprüchen 1 bis 2, dadurch gekennzeichnet, daß das dem Wirbelschichtreaktor zugeführte Ca(OH)₂ ganz oder teilweise durch CaO ersetzt wird.

4. Verfahren nach den Ansprüchen 1 bis 3, dadurch gekennzeichnet, daß dem Feststoffgemisch pro Mol des in den Wirbelschichtreaktor eingebrachten FeSO₄ 0,1 bis 0,5 Mol MnSO₄ zugegeben werden.

5. Verfahren nach den Ansprüchen 1 bis 4, dadurch gekennzeichnet, daß der Wirbelschichtreaktor mit einem Feststoffgemisch betrieben wird, das aus 0,1 bis 5 Gew.% Eisensulfaten, berechnet als FeSO₄, 10 bis 60 Gew.% Flugasche und Rest Kalziumverbindungen besteht.

## Claims

1. A process for dedusting, desulphurising and removing nitrogen oxides from combustion off-gases, wherein the dust-containing combustion off-gases are mixed with NH₃ and are then fed as a fluidising gas to a fluidised bed reactor into which Ca(OH)₂ and FeSO₄ are introduced and which is operated at a temperature of 300 to 450°C with an average solids concentration of 0.3 to 3 kg/Nm³ and a gas velocity of 2.5 to 7.5 m/sec, wherein the combustion gases emerging from the fluidised bed reactor are fed into a multistage electrostatic precipitator, wherein the solids deposited in the first stage of the electrostatic precipitator are returned to the fluidised bed reactor and the solids deposited in the further stages of the electrostatic precipitator are partly returned to the fluidised bed reactor and partly discharged, so that a solid mixture of fly ash, iron sulphates and the calcium compounds Ca(OH)₂, CaCO₃, CaO, CaSO₄ and CaSO₃ is produced in the fluidised bed reactor.

2. A process according to claim 1, characterised in that 0.7 to 1.3 moles of NH₃ per mole of NO₂ are fed to the combustion off-gases.

3. A process according to claims 1 to 2, characterised in that the Ca(OH)₂ fed to the fluidised bed reactor is wholly or partially replaced by CaO.

4. A process according to claims 1 to 3, characterised in that 0.1 to 0.5 moles of MnSO₄ per mole of FeSO₄ introduced into the fluidised bed reactor are fed to the mixture of solids.

5. A process according to claims 1 to 4, characterised in that the fluidised bed reactor is operated with a mixture of solids which consists of 0.1 to 5 weight % of iron sulphates calculated as FeSO₄, 10 to 60 weight % of fly ash, balance calcium compounds.

## Revendications

1. Procédé pour le dépoussiérage, la désulfuration et la dénitration de gaz d'échappement provenant de la combustion, dans lequel les gaz d'échappement provenant de la combustion contenant des poussières sont mélangés avec du NH₃ et ensuite introduits dans le réacteur à couche turbulente sous forme d'un gaz turbulent, réacteur dans lequel on introduit du Ca(OH)₂, de même que du FeSO₄ et lequel est opéré à une température de 300 à 450°C, avec une concentration moyenne en matière solide de 0,3 à 3 kg/Nm³, de même qu'avec une vitesse des gaz de 2,5 à 7,5 m/s, procédé dans lequel les gaz d'échappement provenant de la combustion sortant du réacteur à couche turbulente sont amenés dans un séparateur électrostatique à plusieurs étages, procédé dans lequel les matières solides isolées dans le premier étage du séparateur électrostatique sont réintroduites dans le réacteur à couche turbulente et dans lequel les matières solides isolées dans les étages ultérieures du séparateur électrostatique sont réintroduites partiellement dans le réacteur à couche turbulente et partiellement éliminées, de telle manière qu'il se forme, dans le réacteur à couche turbulente, un mélange de matières solides composé de cendres volantes, de sulfates de fer et des composés du calcium Ca(OH)₂, CaCO₃, CaO, CaSO₄, de même que CaSO₃.

2. Procédé selon la revendication 1, caractérisé en ce qu'on ajoute aux gaz d'échappement provenant de la combustion par mole de NO₂ 0,7 à 1,3 moles de NH₃.

3. Procédé selon les revendications 1 à 2, caractérisé en ce qu'on remplace le Ca(OH)₂ introduit dans le réacteur à couche turbulente entièrement ou partiellement par du CaO.

4. Procédé selon les revendications 1 à 3, caractérisé en ce qu'on ajoute au mélange de matières solides par mole de FeSO₄ introduit dans le réacteur à couche turbulente 0,1 à 0,5 mole de MnSO₄.

5. Procédé selon les revendications 1 à 4, caractérisé en ce qu'on opère le réacteur à couche turbulente avec un mélange de matières solides qui est composé de 0,1 à 5% en poids de sulfates de fer, calculés sous forme de FeSO₄, de 10 à 60% en poids de cendres volantes et le reste de composés du calcium.
